(19) Europäisches Patentamt
European Patent Office
Office européen des brevets

(11) EP 2 524 012 B1

# (12) EUROPÄISCHE PATENTSCHRIFT

(45) Veröffentlichungstag und Bekanntmachung des Hinweises auf die Patenterteilung:
**03.12.2014 Patentblatt 2014/49**

(21) Anmeldenummer: **11701190.8**

(22) Anmeldetag: **10.01.2011**

(51) Int Cl.:
***C09D 5/00*** *(2006.01)* ***C08F 8/00*** *(2006.01)*

(86) Internationale Anmeldenummer:
**PCT/CH2011/000003**

(87) Internationale Veröffentlichungsnummer:
**WO 2011/082500 (14.07.2011 Gazette 2011/28)**

## (54) OBERFLÄCHENBESCHICHTUNGEN MIT ANTI-EIS EIGENSCHAFTEN

SURFACE COATINGS WITH ANTI-ICE CHARACTERISTICS

REVÊTEMENTS SUPERFICIELS DOTÉS DE PROPRIÉTÉS ANTI-GLACE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2010 EP 10000156**

(43) Veröffentlichungstag der Anmeldung:
**21.11.2012 Patentblatt 2012/47**

(73) Patentinhaber: **Liebherr-Hausgeräte Ochsenhausen GmbH
88416 Ochsenhausen (DE)**

(72) Erfinder:
- **HIRAYAMA, Martina
CH-8537 Nussbaumen (CH)**
- **SIEGMANN, Konstantin
CH-8606 Greifensee (CH)**
- **MEOLA, Giuseppe
CH-8408 Winterthur (CH)**
- **SCHAEFER, Carsten
84453 Mühldorf (DE)**
- **DAENHARDT, Karin
CH-8406 Winterthur (CH)**

(74) Vertreter: **Herrmann, Uwe
Lorenz - Seidler - Gossel
Widenmayerstrasse 23
80538 München (DE)**

(56) Entgegenhaltungen:
**EP-A2- 0 979 833**
**WO-A1-2007/058373**
**DE-U1- 20 023 628**
**GB-A- 1 494 090**
**US-B1- 7 003 920**

- **OKOROAFOR E U ET AL: "Minimising frost growth on cold surfaces exposed to humid air by means of crosslinked hydrophilic polymeric coatings", APPLIED THERMAL ENGINEERING, PERGAMON, OXFORD, GB, Bd. 20, 1. Januar 2000 (2000-01-01), Seiten 737-758, XP007913487, ISSN: 1359-4311 in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Oberflächenbeschichtungen mit Anti-Eis Eigenschaften, Formkörper und Vorrichtungen umfassend solche Beschichtungen, Verfahren zur Herstellung und Verwendung solcher Beschichtungen, Formkörper und Vorrichtungen.

Die Vereisung ("freezing") von Oberflächen bzw. das Vermeiden oder Verzögern solcher Vereisungen ist ein bekanntes und viel untersuchtes Gebiet. Unerwünschte Vereisungen treten an den verschiedensten Oberflächen auf, als Beispiele seien Oberflächen an Energieerzeugungsanlagen (wie Rotorblätter von Windkraftanlagen), an Transportmitteln (wie Flügel- und Rotoroberflächen, Sichtscheiben) und an Verpackungen genannt.

GB1494090 beschreibt härtbare Zusammensetzungen welche eine spezifische wässrige Dispersion und ein wärmehärtendes Harz enthalten sowie damit beschichtete Substrate. In diesem Dokument werden jedoch keine Beschichtungen offenbart, in denen ein aktives Polymer in eine Matrix via kovalente Bindung eingelagert ist. Ferner offenbart das genannte Dokument keine Anti-Eis Eigenschaften der offenbarten Beschichtungen.

EP0979833 offenbart wässrige Dispersionen enthaltend spezifische Acrylat-Derivate und deren Verwendung als Verdicker. Die dort offenbarten Verbindungen unterscheiden sich von den erfindungsgemässen Verbindungen der Formel (Ia), da R1 nicht für Wasserstoff steht. Ferner wird im genannten Dokument weder Oberflächenbeschichtungen noch auf Anti-Eis Eigenschaften eingegangen.

DE 20023628 (und ebenso US 7003920) offenbart durchsichtige Verglasungen, die mit einer adsorbierenden Frostschutzschicht kombiniert sind. In besagter Schutzsicht ist jedoch nicht vorgesehen, ein aktives Polymer in eine Matrix via kovalente Bindung einzulagern.

Applied Thermal Engineering, 20 (2000) 737, beschreibt Beschichtungen, welche das Vereisen verzögern. Als Beschichtungen werden hydrophile Polymere, wie VP und MMA eingesetzt, die ggf. mit einer unvernetzten Matrix aus PIB kombiniert werden. Es werden jedoch keine Beschichtungen offenbart, in denen ein aktives Polymer in eine Matrix via kovalente Bindung eingelagert ist. Die so hergestellten Beschichtungen zeigen einen geringen Effekt, schlechte mechanische Eigenschaften (Klebrigkeit) und werden in hohen Schichtdicken aufgetragen.

Aus der WO 2007/058373 A1 ist eine Struktur bekannt, die eine Klebeschicht, ein Kunststoffsubstrat und eine hydrophile Beschichtung aufweist. Die Beschichtung umfasst eine vernetzte Struktur, die durch Hydrolyse und Polykondensation erhalten wird. Die Beschichtung kann ein hydrophiles Polymer und ein hydrolysierbares Metall-Alkoxid enthalten.

EP1198432 beschreibt Anti-Freeze Beschichtungen enthaltend ein Gemisch aus einem hydrophilen Polymer, welches kombiniert wird entweder mit einem mesoporösen Material oder mit einem organischem / anorganischem Adsorptionsmaterial. Die in diesem Dokument beschriebenen Komponenten liegen als physikalisches Gemisch vor. Die Beständigkeit dieser Beschichtungen erweist sich in verschiedenen Anwendungen als ungenügend.

Aufgabe der vorliegenden Erfindung ist es daher, alternative Anti-Eis Beschichtungen zur Verfügung zu stellen, welche eines oder mehrere der vorstehend genannten Probleme lösen.

Diese Aufgabe wird gelöst durch die Bereitstellung einer Beschichtung wie nachfolgend beschrieben, insbesondere gemäss den Merkmalen der Ansprüche 1, 2, 7, 11. Weitere Aspekte der Erfindung sind in den unabhängigen Ansprüchen sowie in der Beschreibung angegeben. Vorteilhafte Ausgestaltungen sind in den abhängigen Ansprüchen sowie in der Beschreibung angegeben. Im Rahmen der vorliegenden Erfindung können die verschiedenen Ausführungsformen und bevorzugten Bereiche beliebig miteinander kombiniert werden. Ferner können spezifische Ausführungsformen, Bereiche oder Definitionen nicht zur Anwendung kommen bzw. entfallen.

Im Rahmen der vorliegenden Erfindung wichtige Begriffe sollen nachstehend besonders erläutert werden; sofern sich aus dem spezifischen Zusammenhang nichts Gegenteiliges ergibt, sollen daher diese Erläuterungen Anwendung finden.

Der Begriff "Sol-Gel" ist allgemein bekannt, und umfasst insbesondere Sol-Gele, die durch Hydrolyse und Kondensation von Metall- bzw. Halbmetallprekursoren gebildet werden ("Sol-Gel Prozess"). Der Sol-Gel-Prozess ist ein geeignetes Verfahren zur Herstellung nichtmetallischer anorganischer oder hybridpolymerer Beschichtungen aus kolloidalen Dispersionen, den so genannten Solen. Aus ihnen entstehen in Lösung in ersten Grundreaktionen feinste Teilchen. Als ein Gel wird ein Netzwerk bezeichnet, welches aus Metall- bzw. Halbmetallprekursoren besteht. Geeignet sind Prekursoren der Formel (IV)

$$R^{11}{}_{n}MR^{12}{}_{a-n} \qquad (IV)$$

in welcher

- $R^{11}$ unabhängig voneinander für eine nichthydrolisierbare Gruppe, wie z.B. C1-C8 Alkyl, insbesondere Methyl und Ethyl, steht;
- $R^{12}$ unabhängig voneinander für eine hydrolisierbare Gruppe, wie z. B. C1-C8 Alkoxy, insbesondere Methoxy und

Ethoxy, steht;

M für ein Element aus der Gruppe umfassend Si, Al, Zr und Fe steht;

a für 4 steht (falls M für Si, Zr steht) oder a für 3 steht (falls M für Al, Fe steht);

n für 0, 1, 2, 3 steht.

Sol-Gele können aus einem Typ Prekursor bestehen oder aus einer Mischung verschiedener Prekursoren. Wird ein Siliziumalkoxid verwendet, sind die bevorzugten Silane der obigen allgemeinen Formel Tetramethoxysilan und Tetraethoxysilan (n = 0). Besonders geeignet sind Gemische aus Tetraalkoxysilan und Trialkoxyorganosilan (n = 1). Bevorzugte Prekursoren enthalten somit ein Gemisch aus

$$SiR^{12}_4 \text{ (IVa) und } R^{11}SiR^{12}_3 \qquad \text{(IVb)}$$

in welchen $R^{11}$ und $R^{12}$ die vorstehend genannte Bedeutung aufweisen. Im erfindungsgemässen Herstellungsverfahren wird eine Beschichtungszusammensetzung, die die vorstehend genannten Sole enthält, auf die entsprechende Oberfläche aufgebracht.

Der Begriff "Polymer" ist allgemein bekannt, und umfasst insbesondere technische Polymere aus der Gruppe der Polyolefine, Polyester, Polyamide, Polyurethane, Polyacrylate. Polymere können als Homo-Polymere, Co-Polymere oder Blends vorliegen.

Der Begriff "Substrat" ist allgemein bekannt, insbesondere umfasst er alle Körper mit einer festen Oberfläche, die beschichtbar ist. Der Begriff Substrat ist daher losgelöst von einer spezifischen Funktion oder Dimension. Substrate können "unbeschichtet" oder "beschichtet" sein. Der Ausdruck "unbeschichtet" bezeichnet solche Substrate, denen die erfindungsgemässe äussere Schicht fehlt; schliesst jedoch die Anwesenheit anderer Schichten (z.B. einer Lackschicht, eines Aufdrucks und dgl.) nicht aus.

Das Konzept der "funktionellen Gruppen" ist allgemein bekannt und bezeichnet Atomgruppen in einem Molekül, welche die Stoffeigenschaften und das Reaktionsverhalten der sie tragenden Moleküle maßgeblich beeinflussen. Sofern eine Verbindung (Polymer, Monomer, Precursor usw.) als "funktionalisiert" bzw. "unfunktionalisiert" bezeichnet wird, bezieht sich dies auf die Anwesenheit bzw. Abwesenheit von funktionellen Gruppen. Sofern eine Funktionalisierung vorliegt, bezeichnet dies insbesondere eine effektive Menge dieser funktionellen Gruppen um den gewünschten Effekt zu erreichen. Im Rahmen der vorliegenden Erfindung bezeichnet der Ausdruck insbesondere kovalent an ein Sol-Gel oder Polymer gebundene Gruppen.

Der Begriff "Anti-Eis" ("Anti-Icing"), auch in zusammengesetzten Ausdrücken wie "anti-eis-Beschichtung" ist allgemein bekannt. Anti-Eis bedeutet, dass das Vereisen von Oberflächen verhindert oder verzögert wird. Ohne sich an eine Theorie gebunden zu fühlen, kann der Effekt des "Anti-Eis" im vorliegenden Fall durch die Fähigkeit hydrophiler Polymere grosse Wassermengen aufnehmen zu können, erklärt werden. Die hydrophile Eigenschaft des Polymers bewirkt, dass die Polymeroberfläche schichtweise durch das kondensierte Wasser angefeuchtet wird. Das Gefrieren des aufgenommenen Wassers wird unterdrückt und eine Vereisung der Oberfläche vermieden oder verzögert.

Die vorliegende Erfindung betrifft daher in einem **ersten Aspekt** Beschichtungen umfassend (d.h. enthaltend oder bestehend aus) eine Matrix und darin eingelagert ein wirksames Polymer, dadurch gekennzeichnet,
dass entweder (i) die Matrix vernetzt ist oder (ii) das wirksame Polymer vernetzt ist oder (iii) das wirksame Polymer kovalent and die Matrix gebunden ist; und
dass im Falle eines vernetzten wirksamen Polymers (ii) auf eine Matrix verzichtet werden kann; und
dass das wirksame Polymer Struktureinheiten der Formel

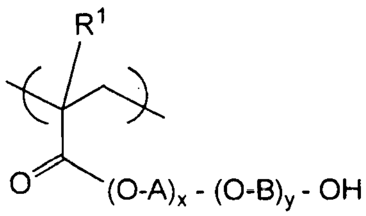

(Ia)

und/oder

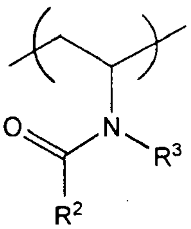

(Ib)

und/oder

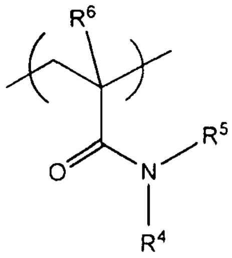

(Ic)

enthält, worin

$R^1$ für Wasserstoff oder C1-C6-Alkyl steht,
A für eine C2-C4-Alkylengruppe steht,
B für eine C2-C4-Alkylengruppe steht, mit der Maßgabe, dass A von B verschieden ist,
x, y unabhängig voneinander für eine ganze Zahl von 1 - 100 steht,
$R^2$ und $R^3$ unabhängig voneinander für Wasserstoff oder C1-C6-Alkyl stehen, oder $R^2$ und $R^3$ gemeinsam unter Einschluss des Stickstoffatoms und der Carbonylgruppe einen Ring von 5, 6 oder 7 Ringatomen (d.h. ein Lactam) bilden,
$R^4$ und $R^5$ unabhängig voneinander für Wasserstoff, C1-C6-Alkyl oder C1-C6-Cycloalkyl stehen, oder $R^4$ und $R^5$ gemeinsam unter Einschluss des Stickstoffatoms einen Ring mit 5, 6 oder 7 Ringatomen bilden,
$R^6$ für Wasserstoff oder C1-C6-Alkyl stehen; und

dass ggf. Vernetzer und / oder Kupplungsreagenz enthalten sind.

Gegenüber bekannten Beschichtungen weisen die erfindungsgemässen Beschichtungen ein verbessertes Eigenschaftsprofil auf, insbesondere verbesserte Anti-Eis Eigenschaften und / oder verbesserte Haltbarkeit und / oder geringere Schichtdicken. Dieser Aspekt der Erfindung soll nachstehend erläutert werden.

Besonders geeignete Ausführungsformen der vorliegenden Erfindung werden nachstehend erläutert.

**Schichtdicke:** Die Schichtdicke der erfindungsgemässen Beschichtung ist nicht kritisch und kann in einem breiten Bereich variiert werden. Beschichtungen auf Basis einer Matrix aus Polymeren haben typischerweise Dicken von 0.5-1000 $\mu$m, bevorzugt 10-80 $\mu$m; Beschichtungen auf Basis einer Matrix aus Sol-Gelen haben typischerweise Dicken von 0.1-100 $\mu$m, bevorzugt 0.5-10 $\mu$m; Beschichtungen frei von Matrix haben typischerweise Dicken von von 0.1-100 $\mu$m, bevorzugt 0.5-10 $\mu$m. Gegenüber bekannten Beschichtungen können die erfindungsgemässen Beschichtungen in deutlich verringerter Schichtdicke aufgebracht werden, ohne den Anti-Eis Effekt nachteilig zu beeinflussen.

**Wirksames Polymer:** Erfindungsgemäss ist die Wahl des wirksamen Polymers von zentraler Bedeutung. Die erfindungsgemässen Beschichtungen enthalten wirksame Polymere; diese liegen an der Oberfläche und im inneren der Matrix vor ("eingelagert"), bevorzugt in einer effektiven Menge. Die Menge an Polymer kann in einem weiten Bereich variieren. In einer vorteilhaften Ausgestaltung liegt das Verhältnis von wirksamen Polymer zu Matrix im Bereich von 20:70 bis 98:2, besonders vorteilhaft 55:45 bis 90:10. Es hat sich gezeigt, dass in diesem Bereich sowohl gute Anti-Eis Eigenschaften als auch gute Haltbarkeit der Beschichtung erzielt werden können. Geeignete Struktureinheiten für solche Polymere werden nachstehend beschrieben; sie enthalten vorteilhaft (bzw. bestehen aus) Acrylaten der Formel (Ia) und / oder Vinylamiden der Formel (Ib) und / oder Acrylamiden der Formel (Ic) sowie ggf. Vernetzern (z.B. der Formeln (IIa) und / oder (IIb) sowie ggf. Kupplungsreagenzien (z.B. der Formel (III)). Es können jeweils eine oder mehrere verschiedene der genannten Komponenten vorliegen.

**Acrylate (Ia):** In einer Ausführungsform enthält das wirksame Polymer zwischen 1 und 100 mol-% Struktureinheiten der Formel (Ia)

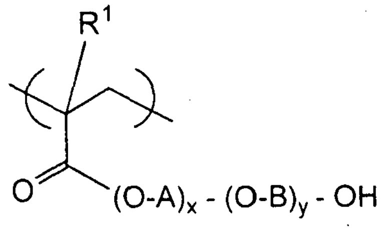

(Ia)

worin

| | |
|---|---|
| $R^1$ | Wasserstoff oder $C_1$-$C_6$-Alkyl, |
| A | $C_2$-$C_4$-Alkylengruppen und, |
| B | $C_2$-$C_4$-Alkylengruppen, mit der Maßgabe, dass A von B verschieden ist, und |
| x, y | unabhängig voneinander eine ganze Zahl von 1 - 100 bedeuten. |

$R^1$ steht in einer bevorzugten Ausführungsform für Wasserstoff oder Methyl.

A und B stehen für $C_2$-$C_4$-Alkylengruppen mit der Maßgabe, dass A ungleich B sind. Das heißt, dass die Struktureinheiten der Formel (Ia) mit bis zu 200 $C_2$-$C_4$-Alkoxy-Einheiten alkoxyliert sein können, wobei es sich entweder um eine blockweise Alkoxylierung mit mindestens zweien aus Ethylenoxid, Propylenoxid oder Butylenoxid oder eine (random) Mischalkoxylierung mit mindestens zweien aus Ethylenoxid, Propylenoxid oder Butylenoxid handeln kann.

A und B stehen in einer bevorzugten Ausführungsform für eine Ethylen- oder Propylengruppe. Besonders bevorzugt handelt es sich bei A um eine Propylengruppe und bei B um eine Ethylengruppe. Speziell handelt es sich bei A um eine Propylengruppe und bei B um eine Ethylengruppe, wobei gilt, dass x = 1 bis 5 und y = 3 bis 40.

Im Falle einer random-Mischalkoxylierung mit EO und PO liegt das Verhältnis von Ethylen- zu Propylengruppen vorzugsweise bei 5:95 bis 95:5, besonders bevorzugt bei 20:80 bis 80:20 und speziell bei 40:60 bis 60:40.

Das wirksame Polymere enthält beispielsweise 2 bis 99, vorzugsweise 5 bis 95, insbesondere 20 bis 80 und speziell 40 bis 60 mol-% Struktureinheiten der Formel (Ia).

In Abhängigkeit von der Struktur der Struktureinheit gemäß Formel (Ia) lassen sich die Eigenschaften der wirksamen Polymere derart modifizieren, dass sie gezielt, entsprechend den gegebenen Bedingungen, als spezifische wirksame Polymere die Anti-Eis Eigenschaften beeinflussen können. Besonders gute Ergebnisse wurden gefunden, wenn in einer Verbindung der Formel (Ia) A für Propan- 1,2-diyl, B für Ethan-1,2-diyl, X für 1 bis 3 (bevorzugt 2), y für 3 bis 7 (bevorzugt 5) und $R^1$ für Methyl steht.

Die Herstellung von Polymeren basierend auf Struktureinheiten der Formel (Ia) ist an sich bekannt und kann durch die Polymerisation alkoxylierter Acryl- oder Methacrylsäurederivate erfolgen (im Folgenden bezeichnet der Begriff Acrylsäure auch die Methacrylsäure). Diese sind durch Alkoxylierung von Acrylsäure oder 2-Alkylacrylsäure bzw. Acrylsäuremonoestern des Ethylenglykols, Propylenglykols oder Butylenglykols (2-Hydroxyethylacrylat, 2-Hydroxypropylacrylat oder 2-Hydroxybutylacrylat) oder 2-Alkylacrylsäuremonoestern des Ethylenglykols, Propylenglykols oder Butylenglykols (2-Hydroxyethyl-2-alkylacrylat, 2-Hydroxypropyl-2-alkylacrylat oder 2-Hydroxybutyl-2-alkylacrylat) erhältlich. Besonders bevorzugt werden die alkoxylierten Acrylsäurederivate durch DMC-katalysierte Alkoxylierung von 2-Hydroxypropylacrylat oder 2-Hydroxypropyl-2-alkylacrylat hergestellt, speziell durch DMC-katalysierte Alkoxylierung von 2-Hydroxypropyl-2-methacrylat. Die DMC-Katalyse erlaubt im Gegensatz zur traditionellen alkalisch katalysierten Alkoxylierung eine sehr gezielte Synthese von Monomeren mit genau definierten Eigenschaften bei Vermeidung von unerwünschten Nebenprodukten. In DE-A-102006049804 und US-6034208 werden die Vorteile der DMC-Katalyse gelehrt.

**Vinylamide (Ib):** In einer weiteren Ausführungsform enthält das wirksame Polymer zwischen 1 und 100 mol-% Struktureinheiten der Formel (Ib)

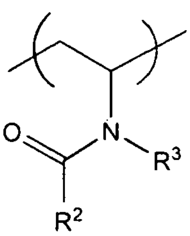

(Ib)

worin $R^2$ und $R^3$ unabhängig voneinander Wasserstoff oder $C_1$-$C_6$-Alkyl bedeuten, oder
worin $R^2$ und $R^3$ unter Einschluss des Stickstoffatoms und der Carbonylgruppe einen Ring von 5, 6 oder 7 Ringatomen

(d.h. ein Lactam) bilden.

$R^2$ und $R^3$ enthalten vorzugsweise jeweils zusammen mindestens 1, insbesondere mindestens 2 Kohlenstoffatome.

Als Beispiele sind dabei unter anderem N-Vinylformamid (NVF), N-Vinylmethylformamid, N-Vinylmethylacetamid (VIMA), N-Vinylacetamid, N-Vinylpyrrolidon (NVP), 5-Methyl-N-vinylpyrrolidon, N-Vinylvalerolactam, N-vinylimidazol und N-Vinylcaprolactam zu nennen. In einer bevorzugten Ausführungsform der Erfindung leiten sich die Struktureinheiten der Formel (I) von N-Vinylacetamid, N-Methyl-N-vinylacetamid, Vinylpyrrolidon und Vinylcaprolactam ab.

Polymere basierend auf Struktureinheiten der Formel (Ib) sind durch die Polymerisation der entsprechenden Vinylmonomere zugänglich; diese können auf bekannte Art hergestellt werden.

Die bevorzugten Mengen an Struktureinheiten der Formel (Ib) liegen zwischen 2 bis 99, vorzugsweise 5 bis 95, insbesondere 20 bis 80 und speziell 40 bis 60 mol-%.

In einer Ausführungsform ergänzen sich die Struktureinheiten der Formel (Ib) und die Struktureinheiten der Formel (Ia) zu 100 mol-%. Derartige Copolymere sind an sich bekannt oder nach bekannten Methoden herstellbar.

In Abhängigkeit von der Struktur der Struktureinheit gemäß Formel (Ib) lassen sich die Eigenschaften der wirksamen Polymere derart modifizieren, dass sie gezielt, entsprechend den gegebenen Bedingungen, als spezifische wirksame Polymere die Anti-Eis Eigenschaften beeinflussen können. Besonders gute Ergebnisse wurden gefunden, wenn als Verbindung (Ib) NVP eingesetzt wurde.

**Acrylamide (Ic) :** In einer weiteren Ausführungsform enthält das wirksame Polymer zwischen 1 und 100 mol-% Struktureinheiten der Formel (Ic)

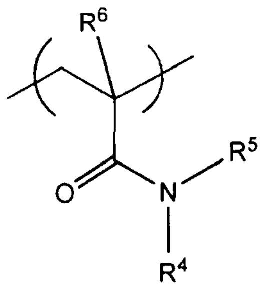

(Ic)

worin

$R^4$ und $R^5$ unabhängig voneinander Wasserstoff, $C_1$-$C_6$-Alkyl oder $C_1$-$C_6$-Cycloalkyl bedeuten, oder unter Einschluss des Stickstoffatoms einen Ring mit 5, 6 oder 7 Ringatomen bilden und
$R^6$ Wasserstoff oder $C_1$-$C_6$-Alkyl bedeuten.

$R^4$ und $R^5$ enthalten vorzugsweise jeweils zusammen mindestens 1, insbesondere mindestens 2 Kohlenstoffatome.

Die Struktureinheiten der Formel (Ic) leiten sich vorzugsweise von (Meth)acrylamid, N-Alkyl(meth)-acrylamiden, N,N-Dialkyl(meth)acrylamiden, 2-Dimethylamino-methacrylat, N-Acryloylpyrrolidin, N-Acryloylmorpholin und N-Acryloylpiperidin ab.

Die bevorzugten Mengen an Struktureinheiten der Formel (Ic) liegen zwischen 2 bis 99, vorzugsweise 5 bis 95, insbesondere 20 bis 80 und speziell 40 bis 60 mol-%.

In einer Ausführungsform ergänzen sich die Struktureinheiten der Formeln (Ia) und (Ic) zu 100 mol-%.

In Abhängigkeit von der Struktur der Struktureinheit gemäß Formel (Ic) lassen sich die Eigenschaften der Polymere derart modifizieren, dass sie gezielt, entsprechend den gegebenen Bedingungen, als spezifische wirksame Polymere die Anti-Eis Eigenschaften beeinflussen können.

Polymere basierend auf Struktureinheiten der Formel (Ic) sind durch die Polymerisation der entsprechenden Acryl-Monomere zugänglich; diese können auf bekannte Art hergestellt werden.

In weiteren Ausführungsformen enthält das wirksame Polymer Struktureinheiten (i) der Formel (Ia); oder (ii) der Formeln (Ia) und (Ib); oder (iii) der Formeln (Ia) und (Ic); oder (iv) der Formeln (Ia) und (Ib) und (Ic). In einer bevorzugten Ausführungsform enthält das wirksame Polymer Struktureinheiten der Formeln (Ia) und (Ib).

In einer weiteren Ausführungsform ergänzen sich die Struktureinheiten der Formeln (Ia), (Ib) und (Ic) zu 100 mol-%.

In einer weiteren Ausführungsform ergänzen sich die Struktureinheiten der Formeln (Ia), (Ib), (Ic) und Kupplungsreagenz (III) zu 100 mol-%.

**Weitere Struktureinheiten:** Neben den Struktureinheiten der Formel (Ia) (Ib) und (Ic) können die wirksamen Polymere weitere, davon verschiedene Struktureinheiten enthalten. In dieser weiteren Ausführungsform ergänzen sich die Struktureinheiten der Formeln (Ia), (Ib) und (Ic) und die nachstehend genannten "weiteren" Struktureinheiten zu 100 mol-%. Bei diesen weiteren Struktureinheiten handelt es sich um solche, die von olefinisch ungesättigten Monomeren abgeleitet sind, welche O, N, S oder P enthalten. Bevorzugt enthalten die Polymere sauerstoff-, schwefel- oder stickstoffhaltige Comonomere, insbesondere sauerstoff- oder stickstoffhaltige.

Geeignete weitere Struktureinheiten sind beispielsweise solche, die aus Styrolsulfonsäure, Acrylamidomethylpropansulfonsäure (AMPS®), Vinylsulfonsäure, Vinylphosphonsäure, Allylsulfonsäure, Methallylsulfonsäure, Acrylsäure, Methacrylsäure und Maleinsäure (und deren Anhydrid) sowie die Salze der im vorangegangenen erwähnten Säuren mit ein- und zweiwertigen Gegenionen abgeleitet sind. Bevorzugt angewendet werden als Gegenionen Lithium, Natrium, Kalium, Magnesium, Calcium, Ammonium, Monoalkylammonium, Dialkylammonium, Trialkylammonium oder Tetraalkylammonium, worin die Alkylsubstituenten der Amine unabhängig voneinander C1 bis C22-Alkylreste darstellen, die mit 0 bis 3 Hydroxyalkylgruppen besetzt sein können, deren Alkylkettenlärige in einem Bereich von C2 bis C10 variieren kann. Zusätzlich können auch ein- bis dreifach ethoxylierte Ammoniumverbindungen mit unterschiedlichem Ethoxylierungsgrad Anwendung finden. Besonders bevorzugt werden Natrium und Ammonium als Gegenionen. Der Neutralisationsgrad der Molfraktion der im vorangegangenen beschriebenen Säuren kann auch von 100 % abweichen. Geeignet sind alle Neutralisationsgrade zwischen 0 und 100 %, besonders bevorzugt ist der Bereich zwischen 70 und 100 %. Weiterhin kommen als geeignete Monomere Ester der Acryl- bzw. der Methacrylsäure mit aliphatischen, aromatischen oder cycloaliphatischen Alkoholen mit einer Kohlenstoffzahl von C1 bis C22 in Frage. Weitere geeignete Monomere sind 2- und 4-Vinylpyridin, Vinylacetat, Methacrylsäureglycidylester, Acrylnitril, Vinylchlorid, Vinylidenchlorid, Tetrafluorethylen und DADMAC. Der Anteil solcher weiterer Struktureinheiten beträgt beispielsweise 1 bis 99, bevorzugt 1,2 bis 80, insbesondere 1,5 bis 60 und speziell 1,7 bis 40 mol-%. In einer Ausführungsform ergänzen sich die Struktureinheiten der Formel (II) und dieser weiteren Struktureinheiten zu 100 mol-%.

**Matrix:** Erfindungsgemäss ist die Wahl der Matrix nicht kritisch, so dass eine Vielzahl dem Fachmann geläufiger Materialien eingesetzt werden kann. Geeignete Materialien können Polymerschichten (wie z.B. Polyurethane, Polyacrylate, Epoxide) und Schichten vom Typ Sol-Gel sein. Die Wahl der geeigneten Schicht hängt unter anderem vom Substrat und von der Wahl des wirksamen Polymers ab, und kann vom Fachmann in einfachen Versuchen bestimmt werden. Schichten vom Typ Sol-Gel zeigen besonders gute Effekte, sind sehr flexibel anwendbar und herstellbar, weswegen sie bevorzugt sind.

**Vernetzung:** Entweder das wirksame Polymer oder die Matrix oder das wirksame Polymer und die Matrix der erfindungsgemässen Beschichtungen sind vernetzt. Die Art der Vernetzung hängt von den verwendeten Materialien ab. Besonders gute Ergebnisse werden gefunden, wenn wirksames Polymer und / oder Matrix teilweise vernetzt sind. Das Ausmass der Vernetzung - unvernetzt, teilweise vernetzt, vollständig vernetzt - kann durch verschiedene, an sich bekannte Methoden bestimmt werden.

Die Vernetzung von wirksamem Polymer wird vorteilhaft mittels Quellung bestimmt. Geeignete Vernetzungsgrade liegen dann in einem Bereich, welcher die Aufnahme von Wasser in das Netzwerk noch ermöglicht.

Die Vernetzung von Sol-Gel Schichten wird vorteilhaft mittels IR Spektroskopie bestimmt. Geeignete relative Vernetzungsgrade liegen dann im Bereich bis zu 80 %, bevorzugt 15 - 80 %.

In einer **vorteilhaften Ausführungsform** betrifft die Erfindung Beschichtungen wie hier beschrieben, umfassend ein wirksames Polymer und eine Matrix, wobei

a. die Matrix ausgewählt ist aus der Gruppe umfassend Sol-Gele und Polymerschichten;
b. das wirksame Polymer 1-100 Gew.% Struktureinheiten der Formel (Ia), (Ib) und/oder (Ic) enthält;
c. das wirksame Polymer kovalent in besagter Matrix eingelagert ist.

Das wirksame Polymer kann auf an sich bekannte Art und Weise kovalent in besagter Matrix eingelagert werden, bspw. (c1) durch Umsetzung des Polymers mit einem Kupplungsreagenz (vgl. Fig. 1) oder (c2) durch direkte Reaktion des wirksamen Polymers mit einer funktionalisierten Matrix (vgl. Fig. 2). Ohne sich an eine Theorie gebunden zu fühlen, wird davon ausgegangen, dass die kovalente Anbindung des wirksamen Polymers an die Matrix zu einer überraschenden Verbesserung des Eigenschaftsprofils der erfindungsgemässen Beschichtung führt. Diese Ausführungsform wird nachstehend im Detail erläutert und ist in Fig. 1 und 2 schematisch dargestellt. In den Figuren bezeichnet (P) das wirksame Polymer mit den Struktureinheiten der Formel (I), (K) das Kupplungsreagenz, (M) die Matrix, (fM) die funktionalisierte Matrix und (S) das Substrat.

Kovalente Anbindung mittels Kupplungsreagenz (III) (Variante c1): Im Zusammenhang mit der vorliegenden Erfindung bezeichnet der Begriff "Kupplungsreagenz" solche Verbindungen, die eine kovalente Bindung des wirksamen Polymers an die Matrix bewirken. In einer Ausführungsform enthält das wirksame Polymer ein oder mehrere Kupplungsreagenzien; insbesondere aus der Gruppe umfassend isocyanatfunktionalisierte Silane (IIIa) und azidosulfonylfunktionalisierte Silane (IIIb). Grundsätzlich sind alle derartigen Silane geeignet; bevorzugt sind die Silane der Formel (IIIa)

und / oder (IIIb)

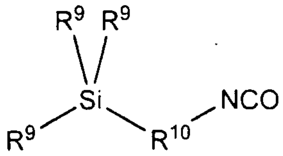

(IIIa)

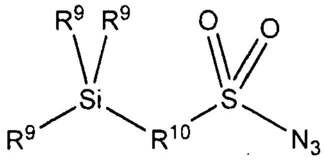

(IIIb)

in welcher

$R^{10}$ die für einen bifunktionellen Kohlenwasserstoffrest mit 1-20 C-Atomen, bevorzugt für einen $C_{6-10}$ Arylrest, $C_{1-10}$ Alkandiylrest, $C_{3-10}$ Cycloalkylrest steht.

$R^9$ unabhängig voneinander für eine hydrolisierbare Gruppe, wie z. B. $C_{1-8}$ Alkoxy, insbesondere Methoxy und Ethoxy, steht.

Kovalent gebundene, wirksame Polymere enthalten daher neben den Struktureinheiten der Formeln (I) weitere Struktureinheiten, welche sich durch die Reaktion mit dem Kupplungsreagenz, also bspw. Verbindungen der Formel (IIIa) bzw. (IIIb) ableiten. Diese Struktureinheiten bewirken eine kovalente Verknüpfung von wirksamen Polymer und Matrix. Im Falle von Verbindungen der Formel (IIIb) wird davon ausgegangen, dass sich beim Aushärten der Beschichtung (Temperaturen bspw. im Bereich von 160°C), aus dem Molekül molekularer Stickstoff abgespalten wird, wobei sich ein Nitren bildet. Das gebildete Nitren kann dann in eine CH-Bindung des wirksamen Polymers eingebunden werden (Einschubreaktion) und bewirkt so eine kovalente Anbindung. Der Anteil solcher weiterer Struktureinheiten beträgt beispielsweise 1 bis 99, bevorzugt 1,2 bis 80, insbesondere 1,5 bis 60 und speziell 1,7 bis 40 mol-%. In einer Ausführungsform ergänzen sich die Struktureinheiten der Formeln (I) und dieser weiteren Struktureinheiten der Formel (IIIa) und/oder (IIIb) zu 100 mol-%.

Kupplungsreagenzien, insbesondere Verbindungen der Formel (IIIa) und (IIIb), sind allgemein bekannt und können nach bekannten Verfahren hergestellt werden. Kupplungsreagenzien, insbesondere Verbindungen der Formel (IIIa) und (IIIb), sind besonders geeignet zur Verknüpfung mit einer Matrix ausgewählt aus der Gruppe der Sol-Gele.

Sofern die erfindungsgemässe Beschichtung ein Kupplungsreagenz enthält, a) liegt das Verhältnis von wirksamen Polymer zu Matrix vorteilhaft im Bereich von 30:70 bis 98:2 (w/w) und/oder b) enthält besagtes Polymer bevorzugt 10-50 Gew.% Kupplungsreagenz der Formel (IIIa) und / oder (IIIb).

Kovalente Anbindung mittels funktionalisierter Matrix (c2) : Die direkte kovalente Anbindung von Polymeren an eine funtkionalisierte Matrix, insbesondere an ein funktionanlisieres Sol-Gel oder an eine funktionalisierte Polymerschicht ist an sich bekannt bzw. kann in Analogie zu bekannten Verfahren durchgeführt werden. Im Zusammenhang mit der vorliegenden Erfindung bezeichnet der Begriff "funktionalisierte Matrix" insbesondere solche Verbindungen, die eine kovalente Bindung des wirksamen Polymers an die Matrix bewirken. In einer Ausführungsform enthält die Matrix eine wirksame Menge an funktionellen Gruppen ausgewählt aus der Gruppe umfassend Isocyanate. Die Menge an derartigen funktionellen Gruppen kann in einem breiten Bereich variiert werden und in Reihenversuchen auf die gegebenen Komponenten und das gewünschte Wirkprofil hin optimiert werden. In dieser Ausführungsform sind Sol-Gele als Matrix besonders geeignet.

In einer weiteren **vorteilhaften Ausführungsform** betrifft die Erfindung Beschichtungen wie hier beschrieben, umfassend ein wirksames Polymer und ggf. eine Matrix, wobei

a. die Matrix ausgewählt ist aus der Gruppe umfassend Sol-Gele und Polymerschichten;
b. das wirksame Polymer 1-100 Gew.% Struktureinheiten der Formel (Ia), (Ib) und/oder (Ic) enthält;
c. das wirksame Polymer durch Umsetzung mit einem Vernetzer vernetzt ist.

Im Zusammenhang mit der vorliegenden Erfindung bezeichnet der Begriff "Vernetzer" solche Verbindungen, die eine zweidimensionale und / oder dreidimensionale Vernetzung des wirksamen Polymers bewirken. Ohne sich an eine Theorie gebunden zu fühlen, wird davon ausgegangen, dass die Vernetzung des wirksamen Polymers einer überraschenden Verbesserung des Eigenschaftsprofils der erfindungsgemässen Beschichtung führt. Diese Ausführungsform wird nachstehend im Detail erläutert.

**Vernetzer (II):** In einer Ausführungsform enthält das wirksame Polymer einen oder mehrere Vernetzer; insbesondere aus der Gruppe umfassend Diisocyanate und Diglycidylether. Grundsätzlich sind alle Diisocyanate und alle Glycidether als Vernetzer geeignet; bevorzugt sind die Diisocyanate der Formel (IIa) und Glycidether der Formel (IIb). Solche Verbindungen der Formel (II) sind allgemein bekannt und können nach bekannten Verfahren hergestellt werden.

Bevorzugt sind Diisocyanate der Formel (IIa)

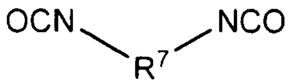

(IIa)

in welcher $R^7$ für einen bifunktionellen Kohlenwasserstoffrest mit 1-20 C-Atomen steht. $R^7$ steht bevorzugt für einen $C_6$-$C_{10}$ Arylrest, $C_1$-$C_{10}$ Alkandiylrest, $C_3$-$C_{10}$ Cycloalkylrest. Als Beispiel für geeignete Diisocyanate seien MDI, TDI (Tolyl-2,4-diisocyanat) HDI und IPDI, insbesondere TDI, genannt.

Bevorzugt sind Diglycidylether der Formel (IIb)

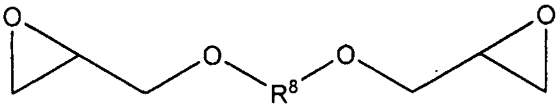

(IIb)

in welcher $R^8$ für einen bifunktionellen, ggf. subsitutierten Kohlenwasserstoffrest mit 1-20 C-Atomen und 0 - 4 O-Atomen steht. $R^8$ steht bevorzugt für einen $C_{6-10}$ Arylrest, $C_{1-10}$ Alkandiylrest, $C_{3-10}$ Cycloalkylrest oder ($C_{6-10}$Aryl)-($C_{1-10}$Alkandiyl)-($C_{6-10}$Aryl)-Rest. $R^8$ steht besonders bevorzugt für Phenyl oder Bisphenyl-A.

Vernetzte, wirksame Polymere enthalten daher neben den Struktureinheiten der Formeln (I) (d.h. (Ia) (Ib) und (Ic)) weitere Struktureinheiten, welche sich durch die Reaktion mit dem Vernetzer, also bspw. mit Verbindungen der Formeln (IIa) und / oder (IIb) ableiten. Diese Struktureinheiten bewirken eine Vernetzung des wirksamen Polymers. Der Anteil solcher weiterer Struktureinheiten beträgt beispielsweise 1 bis 99, bevorzugt 1,2 bis 80, insbesondere 1,5 bis 60 und speziell 1,7 bis 40 mol-%. In einer Ausführungsform ergänzen sich die Struktureinheiten der Formeln (I) und diesen weiteren von Verbindungen der Formel (II) abgeleiteten Struktureinheiten zu 100 mol-%.

Sofern die erfindungsgemässe Beschichtung vernetzt ist, betrifft die Erfindung in einer vorteilhaften Ausführungsform Beschichtungen, die keine Matrix enthalten.

Sofern die erfindungsgemässe Beschichtung vernetzt ist, enthält das wirksame Polymer vorteilhaft 10-90 Gew.% Struktureinheiten der Formel (I), insbesondere Struktureinheiten der Formel (I) in welcher ein Lactam, bevorzugt ein Caprolactam, enthalten ist.

In einer weiteren **vorteilhaften Ausführungsform** betrifft die Erfindung Beschichtungen wie hier beschrieben umfassend ein wirksames Polymer und eine Matrix, wobei

a. die Matrix ausgewählt ist aus der Gruppe umfassend Sol-Gele und Polymerschichten;
b. die Matrix einen IR-spektroskopisch bestimmten relativen Vernetzungsgrad von weniger als 80 %, bevorzugt 15 - 80 % aufweist;
c. das wirksame Polymer 1-100 Gew.%, bevorzugt 40-100 Gew.%, Struktureinheiten der Formel (Ia), (Ib) und / oder (Ic) enthält.

In dieser Ausführungsform betrifft die Erfindung solche Beschichtungen, bei denen die Matrix vernetzt ist und das wirksame Polymer unwesentlich oder nicht, bevorzugt nicht, vernetzt ist. Ohne sich an eine Theorie gebunden zu fühlen, wird davon ausgegangen, dass die Vernetzung der Matrix zu einer überraschenden Verbesserung des Eigenschaftsprofils der erfindungsgemässen Beschichtung führt. Diese Ausführungsform wird nachstehend im Detail erläutert.

In einer vorteilhaften Ausgestaltung betrifft die Erfindung derartige Beschichtungen in denen das Verhältnis von wirksamen Polymer zu Matrix im Bereich von 30:70 bis 98:2, bevorzugt 55:45 bis 70:30, (w/w) liegt.

In einer vorteilhaften Ausgestaltung betrifft die Erfindung derartige Beschichtungen in denen besagte Matrix ausgewählt ist aus der Gruppe umfassend Sol-Gele.

In einer vorteilhaften Ausgestaltung betrifft die Erfindung derartige Beschichtungen in denen besagte Matrix ein Polymer ist, ausgewählt ist aus der Gruppe umfassend Polyolefine, Polyester, Polyamide, Polyurethane, Polyacrylate.

In einer vorteilhaften Ausgestaltung betrifft die Erfindung derartige Beschichtungen in denen besagtes Polymer 40-60 Gew.% Struktureinheiten der Formel (Ib) enthält, in welcher ein Lactam, bevorzugt Caprolactam, enthalten ist.

In einer vorteilhaften Ausgestaltung betrifft die Erfindung derartige Beschichtungen in denen besagtes Polymer

zusätzlich 10-50 Gew.% Vernetzer der Formel (IIb) enthält, in welcher $R^8$ ein Bisphenyl-A Rest ist.

Die Erfindung betrifft in einem **zweiten Aspekt** Formkörper bzw. Vorrichtungen umfassend eine Beschichtung wie vorstehend beschrieben als äusserste Beschichtung eines Substrates. Nachstehend wird dieser Aspekt der Erfindung beschrieben.

**Substrat:** Erfindungsgemäss ist die Wahl des Substrate nicht kritisch, so dass eine Vielzahl dem Fachmann geläufiger Substrate eingesetzt werden kann. Geeignete Substrate weisen eine Oberfläche auf, die beschichtbar ist; solche Oberflächen können aus der Gruppe umfassend metallische Werkstoffe, keramische Werkstoffe, glasartige Werkstoffe, polymere Werkstoffe und cellulosehaltige Werkstoffe ausgewählt werden. Bevorzugte metallische Werkstoffe sind im Zusammenhang mit der vorliegenden Erfindung Legierungen des Aluminiums, Eisens und Titans. Bevorzugte polymere Werkstoffe sind im Zusammenhang mit der vorliegenden Erfindung Polymerisate, Polykondensate, Polyaddukte, Harze sowie Verbundwerkstoffe (z.B. GFK). Bevorzugte cellulosehaltige / ligninhaltige Werkstoffe sind Papier, Karton, Holz. Die Substrate selbst können aus mehreren Schichten aufgebaut sein ("Sandwichstruktur"), bereits Beschichtungen enthalten (z.B. eine Lackierung, ein Aufdruck), mechanisch behandelt sein (z.B. poliert) und / oder chemisch behandelt sein (z.B. geätzt, aktiviert)

**Formkörper:** Wie bereits eingangs erwähnt, besteht bei den verschiedensten Vorrichtungen ein Bedarf, diese mit anti-Eis Eigenschaften zu versehen. Daher betrifft die vorliegende Erfindung solche Vorrichtungen im weitesten Sinne. Im Besonderen sind Vorrichtungen umfasst, welche i) in Energieerzeugungs- und Energieversorgungsanlagen ii) in Transportmitteln iii) in der Lebensmittelbranche iv) in Mess- und Regelungseinrichtungen v) in Wärmeübertragungssystemen vi) im Erdöl- und Ergastransport zum Einsatz kommen. Beispielhaft sei auf die folgenden Vorrichtungen / Einrichtungen verwiesen:

- Energieerzeugungs- und Energieversorgungsanlagen: Hochspannungsleitungen, Rotorblätter von Windkraftanlagen
- Transportmittel und -einrichtungen: Tragflächen, aber auch Rotorblätter, Rumpf, Antennen, Sichtscheiben von Flugzeugen. Sichtscheiben von Kraftfahrzeugen; Rumpf aber auch Mast Steuerblätter und Takelage von Schiffen; Außenflächen von Eisenbahnwaggons; Oberflächen von Verkehrszeichen.
- Lebensmittelbranche: Auskleidung von Kühlgeräten, Verpackungen von Lebensmitteln.
- Mess- und Regelungseinrichtungen: Sensoren.
- Wärmeübertragungssysteme: Vorrichtungen zum Transport von Eisbrei; Oberflächen von Solaranlagen; Oberflächen von Wärmetauschern.
- Erdöl- und Erdgastransport: Oberflächen, die beim Transport von Erdöl- und Erdgas mit Gasen Kontakt haben, zur Vermeidung der Gashydratbildung.

Erfindungsgemäss kann die hier beschriebene Beschichtung die Vorrichtung ganz oder teilweise bedecken. Der Bedeckungsgrad hängt unter anderem von der technischen Notwendigkeit ab. So kann es bei Rotorblättern ausreichend sein, deren Frontkanten zu beschichten um einen ausreichenden Effekt zu erzielen; bei der Beschichtung von Sichtscheiben hingegen ist eine vollständige oder nahezu vollständige Beschichtung vorteilhaft. Zur Gewährleistung der Anti-Eis Eigenschaften ist es wichtig, dass die hier beschriebene Beschichtung als äusserste (oberste) Schicht vorliegt.

Die **Anbindung** der hier beschriebenen Beschichtung auf ein Substrat kann durch kovalente Bindung, ionische Bindung, dipolare Wechselwirkung oder vdW - Wechselwirkung erfolgen. Sol-Gele werden bevorzugt über kovalente Wechselwirkung an das Substrat gebunden; Polymere haften auf Substraten im Wesentlichen aufgrund dipolarer oder vdW - Wechselwirkung.

Die Erfindung betrifft ferner die **Verwendung** der hier beschriebenen Beschichtungen als Anti-Eis Beschichtung. Die Erfindung betrifft ebenso eine Methode zur Benutzung einer äusseren Schicht wie hier beschrieben als Anti-Eis Beschichtung.

Die Erfindung betrifft in einem **dritten Aspekt** Verfahren zur Herstellung einer Beschichtung (bzw. eines beschichteten Substrates) wie hier beschrieben. Die Herstellung von beschichteten Substraten ist an sich bekannt, wurde jedoch auf die spezifischen, hier beschriebenen Komponenten noch nicht angewendet. Die Herstellungsverfahren richten sich grundsätzlich danach, woraus die Matrix und das wirksame Polymer der erfindungsgemässen Beschichtung besteht.

Demgemäss betrifft die Erfindung ein Verfahren zur Herstellung eines beschichteten Substrates wie hier beschrieben dadurch gekennzeichnet, dass a) ein unbeschichtetes Substrat bereitgestellt und ggf. aktiviert wird; b) eine Zusammensetzung enthaltend Matrix und wirksames Polymer wie hier beschrieben bereitgestellt wird und iii) besagtes Substrat mit besagter Zusammensetzung beschichtet wird, bspw. mittels Dip-Coating oder Spray-Coating.

Vorteilhafte Ausführungsformen des beschriebenen Herstellungsverfahrens werden nachstehend im Einzelnen erläutert. Weiterhin wird im Zusammenhang mit den verschiedenen Herstellungsverfahren auf die Beispiele verwiesen.

**Sol-Gel-Schichten:** Sofern die Matrix vom Typ Sol-Gel ist, umfasst die Herstellung der erfindungsgemässen Beschichtungen entweder i) die Bereitstellung eines Sol-Gels und die Auftragung dieses Sol-Gels auf das unbeschichtete

Substrat oder ii) die Bereitstellung und Auftragung von Sol-Gel-Precursoren auf das unbeschichtete Substrat mit anschliessender Hydrolyse und Kondensation unter Bildung eines Sol-Gels. Die Herstellung eines Sol-Gels aus den entsprechenden Precursoren ist bekannt bzw. kann in Analogie zu bekannten Verfahren unter Verwendung geeigneter Precursoren, welche hydrolysiert und kondensiert werden, erfolgen. Die Auftragung eines Sol-Gels bzw. von Sol-Gel-Precusoren ist an sich bekannt und kann in Analogie zu bekannten Verfahren, bspw. mittels Spin-Coating, Dipcoating, Sprühen oder Fluten, erfolgen. Die für diese Verfahren eingesetzten Precursoren enthalten bereits die hier beschriebenen funktionellen Gruppen der Formel (I). Bevorzugt ist die Herstellung gemäss i).

**Polymerschichten:** Sofern die Matrix eine Polymerschicht ist, umfasst die Herstellung der erfindungsgemässen Beschichtungen entweder i) die Bereitstellung eines Polymers welches ggf. in einer Flüssigkeit verteilt ist, und die Auftragung dieses Polymers auf das unbeschichtete Substrat oder ii) die Auftragung von Monomeren welche ggf. in einer Flüssigkeit verteilt sind auf das unbeschichtete Substrat mit anschliessender Polymerisation oder iii) die Bereitstellung eines Substrates mit einer äusseren unfunktionalisierten aber funktionalisierbaren Polymerschicht und Umsetzung dieser Polymerschicht mit Verbindungen enthaltend funktionelle Gruppen der Formel (I). Die Herstellung eines Polymers enthaltend funktionelle Gruppen der Formel (I) aus den entsprechenden Monomeren ist bekannt bzw. kann in Analogie zu bekannten Verfahren unter Verwendung geeigneter Monomeren, welche einer polymerbildenden Reaktion (Polymerisation, Polykondensation, Polyaddition) unterworfen werden, erfolgen. Solche polymerbildenden Reaktionen können beispielsweise katalytisch, radikalisch, photochemisch (z.B. mit UV) oder thermisch initiiert werden. Ferner können entweder Monomere enthaltend die funktionellen Gruppen der Formel (I) polymerisiert werden (Varianten i und ii) oder Monomere enthaltend keine funktionellen Gruppen der Formel (I) polymerisiert werden und die so gebildeten unfunktionalisierten Polymere in einer oder mehreren weiteren Reaktion zu funktionalisierten Polymeren umgesetzt werden (Variante iii). Ferner kann es notwendig oder vorteilhaft sein, die funktionellen Gruppen der Formel (I) im Verlauf des Herstellungsprozesses mit Schutzgruppen zu versehen. Die Bereitstellung des Polymers oder des entsprechenden Monomers kann in Form der Substanz oder in verdünnter Form, d.h. eine Flüssigkeit enthaltend das Polymer / Monomer (Suspension, Emulsion, Lösung), erfolgen. Die Auftragung eines Polymers bzw. von Monomeren ist an sich bekannt und kann in Analogie zu bekannten Verfahren, bspw. mittels Spin-Coating, Dipcoating, Sprühen oder Fluten, erfolgen.

**Wirksame Polymere:** Die Herstellung von wirksamen Polymeren, sofern Sie nur eine Struktureinheit enthalten (Homo-polymere) ist bekannt bzw. wurde bereits beschrieben. Wirksame Polymere, enthaltend zwei oder mehr Struktureinheiten der Fromeln (I) (d.h. (Ia) und / oder (Ib) und / oder (Ic)) ggf. der Formeln (II) und ggf. der Formeln (III), können in Analogie zu bekannten Verfahren hergestellt werden. So kann die Herstellung bspw. durch radikalische Polymerisation der entsprechenden Monomeren unter Verwendung eines geeigneten Radikalstarters bei Temperaturen zwischen 50 und 150°C erfolgen. Das Molekulargewicht der so hergestellten Polymere kann sich im Bereich von 1.000 bis $10^6$ g/mol bewegen, bevorzugt sind aber Molekulargewichte zwischen 1.000 und 400.000 g/mol. Solche Polymerisationen können in Gegenwart eines Verdünnungs / Lösungsmittels durchgeführt werden. Als Lösungsmittel eignen sich Alkohole, wie wasserlösliche Mono- oder Dialkohole, z. B. Propanole, Butanole, Ethylenglykol sowie oxethylierte Monoalkohole wie Butylglycol, Isobutylglycol und Butyldiglycol. Es bilden sich nach der Polymerisation im Allgemeinen klare Lösungen. **Zusätzliche Prozessschritte:** Den hier beschriebenen Herstellungsverfahren können zusätzliche, an sich bekannte Reinigungs-, Aufarbeitungs- und / oder Aktivierungsschritte vorangehen bzw. folgen. Solche zusätzlichen Schritte hängen unter anderem von der Wahl der Komponenten ab und sind dem Fachmann geläufig. Diese zusätzlichen Schritte können mechanischer Art (z.B. Polieren) oder chemischer Art (z.B. Ätzen, Passivieren, Aktivieren, Beizen, Plasmabehandlung) sein.

Die Erfindung betrifft in einem **vierten Aspekt** ein Verfahren zur Herstellung der vorstehend beschriebenen Vorrichtungen, dadurch gekennzeichnet, dass entweder Verfahren a) eine Vorrichtung enthaltend ein unbeschichtetes Substrat bereitgestellt wird und diese Vorrichtung mit einer Beschichtung wie hier beschrieben beschichtet wird oder Verfahren b) ein Substrat enthaltend eine Beschichtung wie hier beschrieben bereitgestellt wird und dieses beschichtete Substrat mit der Vorrichtung verbunden wird.

Diese Verfahren sind an sich bekannt, aber bisher nicht auf die speziellen Beschichtungen angewandt worden. Die Verfahren a) und b) unterscheiden sich in der Aufbringung der Beschichtung auf die Vorrichtung.

Nach Verfahren a) wird die gewünschte Vorrichtung zunächst hergestellt, ggf. vorbereitet (z.B. gereinigt oder aktiviert), und dann beschichtet. Hierfür kommen alle gängigen Beschichtungsverfahren in Frage, insbesondere Verfahren, wie sie im Bereich Lackieren, Drucken oder Laminieren gängig sind. Nach diesem Verfahren können Halbzeuge oder Endprodukte hergestellt werden.

Nach Verfahren b) wird zunächst ein Zwischenprodukt erzeugt (das beschichtete Substrat), welches mit einem Vorprodukt so verbunden wird, dass sich die o.g. Vorrichtung ergibt. Hierfür kommen alle gängigen stoff-, kraft- oder formschlüssigen Verbindungsverfahren in Frage. Typischerweise wird ein flexibler Film mit der erfindungsgemässen Beschichtung versehen auf ein entsprechendes Substrat geklebt um so eine beschichtete Vorrichtung zu erhalten. Alternativ kann ein Formstück beschichtet werden und dieses durch Kleben, Schweissen, Nieten oder dergleichen an einem unbeschichteten Substrat befestigt werden, um so eine beschichtete Vorrichtung zu erhalten.

**Wege zur Ausführung der Erfindung:** Die Erfindung wird weiterhin erläutert durch die nachfolgenden, nicht

limitierenden Beispiele.

**1. Synthesen**

Tabelle 1: Chemikalien

| Name | Molmasse [g/mol] | Reinheit [%] | Sdp [°C] |
|---|---|---|---|
| 30 % Wasserstoffperoxid | - | 30.0 | - |
| Ethanol p.a. | 46.07 | >99.8 | 79 |
| NaOH (Plätzchen) | 40.00 | 99.5 | 82 |
| Polyvinylpyrrolidon K90 (Fluka) | 360000 | - | - |
| Salzsäure (Fluka) | 36.46 | 37.0 | 105 |
| Tetraethylorthosilikat (Aldrich) | 203.32 | - | 168 |
| THF, wasserfrei (Fluka) | 72.11 | 99.0 | 67 |
| Copolymer* | $M_n$= 5200<br>$M_w$= 18000 | - | - |
| 6-Azidosulfonylhexyltriethoxysilan (ABCR) | 353.51 | | |
| 3-(Isocyanatopropyltiethoxy) silan (Aldrich) | 247.36 | 95.0 | 283 |
| * das verwendete Copolymer besteht aus Monomeren der Formel Ia (in welchen R1 für Methyl, A für 1,2-Propyldien, B für 1,2-Ethyldien, x für 1 bis 5 und y für 3 bis 40 stehen) und aus Monomeren der Formel Ib (in welchen R2 und R3 unter Einschluss des Stickstoffatoms und der Carbonylgruppe ein Caprolactam bilden). | | | |

**Variante A:** In einem 50 ml Becherglas werden x g Polyvinylpyrrolidon (M = 360000; Tab. 2) in 40 ml Ethanol p.a. gelöst. Mit einer Pipette werden y g Tetraethylorthosilicat (Tab. 2) dem gelösten Polymer zugegeben. Um den Sol-Gel Prozess zu starten wird die Reaktionslösung mit 0.5 ml einer 1 mol/L Salzsäure versetzt. Die Reaktionsmischung wird 1 Stunde bei Raumtemperatur gerührt.

**Variante $B^{1/2}$:** In einem 50 ml Becherglas werden x g Polyvinylpyrrolidon (M = 360000; vgl. Tab.) in 40 ml Ethanol p.a. gelöst. In einem 25 ml Becherglas werden y g Tetraethyl-orthosilicat (vgl. Tab.) gelöst in 10 ml Ethanol p.a. mit 0.5 ml einer 1 mol/L Salzsäure versetzt um die Hydrolyse zu starten. Nach einer Reaktionszeit von 1 Stunde wird das vorhydrolysierte Tetraethylorthosilicat dem gelösten Polyvinylpyrrolidon zugegeben. Die Reaktionsmischung wird für eine weitere Stunde bei Raumtemperatur gerührt.

$B^1$ Substrate werden bei 100°C für eine Stunde gehärtet
$B^2$ Substrate werden bei 100°C über Nacht gehärtet

Tabelle 2: Gele nach Variante A und B

| | PVP [x g] | TEOS [y g] | Verhältnis [M %] |
|---|---|---|---|
| Gel 1 | - | 3.00 | 0:100 |
| Gel 2 | 0.15 | 2.85 | 5:95 |
| Gel 3 | 0.75 | 2.25 | 25:75 |
| Gel 4 | 1.5 | 1.50 | 50:50 |
| Gel 5 | 2.25 | 0.75 | 75:25 |
| Gel 6 | 2.85 | 0.15 | 95:5 |
| Gel 7 | 0.90 | 2.10 | 30:70 |
| Gel 8 | 1.20 | 1.80 | 40:60 |

(fortgesetzt)

| | PVP [x g] | TEOS [y g] | Verhältnis [M %] |
|---|---|---|---|
| Gel 9 | 1.35 | 1.65 | 45:55 |
| Gel 10 | 2.90 | 0.10 | 97:3 |
| Gel 11 | 2.95 | 0.05 | 98:2 |

**Variante C:** In einem 50 ml Becherglas werden 7.50 g Copolymer in 40 ml Ethanol p.a. gelöst. Mit einer Pipette werden 1.25 g Tetraethylorthosilicat dem gelösten Polymer zugegeben. Um den Sol-Gel Prozess zu starten, wird die Reaktionslösung mit 0.5 ml einer 1 mol/L Salzsäure versetzt. und dann für 1 h bei Raumtemperatur gerührt.

**Variante D:** In einem 50 ml Becherglas werden 30 g Copolymer in 40 ml wasserfreiem THF gelöst und über Nacht mit 3 g (3-Isocyanatopropyl)triethoxysilan umgesetzt. Anschliessend werden 20 g des umgesetzten Copolymers 7 g Tetraethylorthosilicat in 20 ml Ethanol zugegeben. Um den Sol-Gel Prozess zu starten wird die Reaktionslösung mit 0.5 ml einer 1 mol/L Salsäure versetzt. Die Reaktionsmischung wird 1 h bei Raumtemperatur gerührt.
In dieser Variante wird das wirksame Polymer kovalent an die Matrix vom Sol-Gel Typ gebunden und bildet eine besonders stabile Beschichtung, vgl. Nr. 4.

**Variante E:** 2.8 g Tetraethylorthosilikat (TEOS) und 0.2 g 6-Azidosulfonylhexyl-triethoxysilan werden in 10 ml Ethanol abs. gelöst. 0.7 ml 1 molare Salzsäure wird dazugegeben und die Lösung wird für 2 h bei Raumtemperatur gerührt. Dann wird eine Lösung von 2 g Polyvinylpyrrolidon (PVP) in 20 ml Ethanol abs. dazu gegeben und ca. 22 h bei Raumtemperatur gerührt. Mit dieser Lösung werden Glasobjektträger tauchbeschichtet. Nach 0.5 h lufttrocknen werden die beschichteten Objektträger 5 Stunden bei 160 °C ausgehärtet.

## 2. Analysen

### 2.1 Anti-Eis Test

Für den Test des Anti-Eis-Effektes wird das beschichtete Substrat für 120 Minuten bei -20°C gelagert. In definierten Zeitabständen wird dem beschichteten Substrat feuchtwarme Luft zugeführt. Im vorliegenden Fall wurden die beschichteten Substrate in einem Kühlfach gelagert; feuchtwarme Luft wurde durch Öffnen der Tür zugeführt. Anschliessend wird die Beschichtung des Substrats auf seine Anti-Eis-Wirksamkeit untersucht. Zusätzlich werden die Tests mit einem unbeschichteten Substrat durchgeführt. Dessen Vereisung kann als negative Referenz verwendet werden.

Tabelle 3: Beschichtete Substrate nach den Varianten A-C

| Herstellung nach Variante | Substrat* | Beizsystem $H_2O_2$/ NaOH | Vorbehandlung im O2-Plasma | Dipcoating | Aufpinseln | Erg. |
|---|---|---|---|---|---|---|
| A<br>Referenz | Glas<br>Glas | x | | x | | xx<br>- |
| B<br>Referenz | Glas<br>Glas | x | | x | | x<br>- |
| C<br>Referenz | Glas<br>Glas | x | | x | | xx<br>- |
| D<br>Referenz | Glas<br>Glas | x | | x | | xx<br>- |
| E<br>Referenz | Glas<br>Glas | | | x | | xx<br>- |
| A<br>Referenz | Stahl<br>Stahl | | | x | | xx<br>- |
| A<br>Referenz | PVC<br>PVC | | x | x | | xx<br>- |
| A<br>Referenz | POM<br>POM | | x | x | | xx<br>-- |

(fortgesetzt)

| Herstellung nach Variante | Substrat* | Beizsystem $H_2O_2$/ NaOH | Vorbehandlung im O2-Plasma | Dipcoating | Aufpinseln | Erg. |
|---|---|---|---|---|---|---|
| A<br>Referenz | PE<br>PE | | x | x | | xx<br>- |
| A<br>Referenz | PA<br>PA | | x | x | | xx<br>- |
| A<br>Referenz | PP<br>PP | | x | x | | xx<br>- |
| A<br>Referenz | ABS<br>ABS | | x | x | | xx<br>- |
| A<br>Referenz | PS<br>PS | | x | | x | xx<br>- |
| A<br>Referenz | bK<br>bK | | | | x | xx<br>- |
| *: bK = bedruckter Karton | | | | | | |

Alle Proben die mit "xx" gekennzeichnet sind, zeigen nach dem oben genanntem Ablauf des Tests im Vergleich zu den unbeschichteten Referenzen die mit "-" versehen wurden, einen ausgeprägten Anti-Eis-Effekt (siehe Tabelle 3). Auch nach 3 Tagen Lagerung bei -20°C sind die beschichteten Proben im Gegensatz zu den Blindproben eisfrei.

### 2.2 Schichtdicke

Nach jeder Schichtauftragung wird die vorhergehende Schicht für 2 Minuten getrocknet. Die Schichtdicke wird mittels Mikrometerschraube (0-0.25 mm) gemessen. Die vom Hersteller angegebene Messungenauigkeit liegt bei 0.001 mm. Es werden jeweils 3 Messungen des unbeschichteten Teil und drei des beschichteten Teils durchgeführt und anschließend der Mittelwert gebildet. Dabei liegen die Messstellen nebeneinander um eine ungleiche Dicke des Objektträgers berücksichtigen zu können. Die Schichtdicke kann nachstehender Tabelle entnommen werden.

Tabelle 4: Schichtdicke des Gels 5

| Anzahl der Schichten | *Objektträger [μm]* | *Beschichtung + Objektträger [μm]* | *Beschichtungsdicke [μm]* |
|---|---|---|---|
| 1 | 970 | 973 | 3 |
| 3 | 970 | 999 | 29 |
| 5 | 971 | 1012 | 91 |

Die Beschichtungen nach Variante E weisen eine Schichtdicke von 6.4 ± 1.3 Mikrometern auf.

### 2.3 Wirksamkeit

Die Proben werden bei -20°C gelagert. In den angegebenen Zeitabständen wird die Wirksamkeit der Beschichtungen kontrolliert.
Die Wirksamkeit kann nachstehender Tabelle entnommen werden, dabei bedeutet "O" - eisfrei und "K" - einzelne Einkristall. Die Schichten zeigen schon ab einer Schichtdicke von 3 μm eine Wirksamkeit.

Tabelle 5: Vereisung des Gels 5

| Gel 5 Anzahl der Schichten | *Zeit der Lagerung bei -20°C* | | |
|---|---|---|---|
| | *5 min* | *20 min* | *120 min* |
| 1 | O | O | K |
| 3 | O | O | O |

(fortgesetzt)

| Gel 5 Anzahl der Schichten | *Zeit der Lagerung bei -20°C* | | |
|---|---|---|---|
| | *5 min* | *20 min* | *120 min* |
| 5 | O | O | O |

**2.4 IR-Untersuchungen**

Mittels der IR Spektroskopie ist es möglich, das Verhältnis von verknüpften Si-O-Si-Einheiten zu freien Si-O-Einheiten zu bestimmen. Folgende Zuordnung der IR Banden bei Gelen gemäß Variante A wird getroffen:

2.4.1 Silikatgerüstmaterial:
798 Ringstruktur von $SiO_4$ Tetraeder
950 Si-O-
1094 Si-O-Si Streckschwingung
1635 H-O-H $H_2O$ Deformationsschwingung
3430 Si-OH Streckschwingung von Oberflächensilanolwasserstoff und Vibrationsstrukturen von Si-O-Si
2.4.2 Polyvinylpyrrolidon:
1270 C-N Valenzschwingung
1420 C-H Deformationsschwingungen benachbart zu C=O
1650 C=O
2900 gesättigte C-H
3400 O-H Wasser

Aus dem Verhältnis der IR Banden zueinander wird auf einen relativen Vernetzungsgrad geschlossen, vgl. Tab. 6.

Tabelle 6

| **Variante A** | Vernetzung [%] |
|---|---|
| 0:100 Gel 1 | 100 |
| 05:95 Gel 2 | 92 |
| 25:75 Gel 3 | 79 |
| 50:50 Gel 4 | 78 |
| 75:25 Gel 5 | 77 |
| 95:05 Gel 6 | 65 |
| **Variante B[1]** | |
| 0:100 Gel 1 | 100 |
| 05:95 Gel 2 | 91 |
| 25:75 Gel 3 | 73 |
| 50:50 Gel 4 | 67 |
| 75:25 Gel 5 | 49 |
| 95:05 Gel 6 | 46 |
| **Variante B[2]** | |
| 0:100 Gel 1 | 100 |
| 05:95 Gel 2 | 85 |
| 25:75 Gel 3 | 83 |
| 50:50 Gel 4 | 51 |
| 75:25 Gel 5 | 28 |

(fortgesetzt)

| **Variante B²** | |
|---|---|
| 95:05 Gel 6 | 16 |

Der Bande bei 1094 $cm^{-1}$ und bei 950 $cm^{-1}$ können verknüpfte Si-O-Si Einheiten bzw. freien Si-O-Einheiten zugeordnet werden. Aus dem Verhältnis dieser beiden Banden zueinander kann eine Aussage über den relativen Vernetzungszustand der silikatischen Gerüstsubstanz getroffen werden. Dem reinen Silica-Gel wird dem Verhältnis von Si-O-Si zu Si-O eine Si-Dichte von 100 zugeordnet. Für die weiteren Gele mit ansteigendem PVP-Gehalt kann im Vergleich zu reinem TEOS eine abnehmende Vernetzung bestimmt werden.

### 2.5 Anti-Eis-Effekt

Eine Anti-Eis-Wirkung ist bei einer relativen Vernetzung von 15-80 % des Ausgangswertes zu verzeichnen. Vernetzungen unter 15 % sind experimentell unter den gegebenen Bedingungen nicht bestimmbar. Es können auch geringere Vernetzungen mit einer Wirksamkeit vorliegen, die allerdings mit dieser Messmethode nicht mehr aufgelöst werden können. Bei einer stärkeren Vernetzung tritt kein Effekt auf. Detaillierte Angaben sind der Tab. 7 zu entnehmen.

Tabelle 7 Anti-Eis-Wirkunq

| **Varinate A** | Anti-Eis-Wirkung | Eigenschaften |
|---|---|---|
| 0:100 Gel 1 | - | milchig |
| 05:95 Gel 2 | - | milchig |
| 25:75 Gel 3 | - | durchsichtig |
| 30:70 Gel 7 | + | durchsichtig |
| 50:50 Gel 4 | + | durchsichtig |
| 75:25 Gel 5 | + | durchsichtig |
| 95:05 Gel 6 | + | durchsichtig |
| **Varinate B[1,2]** | | |
| 0:100 Gel 1 | - | milchig |
| 05:95 Gel 2 | - | milchig |
| 25:75 Gel 3 | - | durchsichtig |
| 50:50 Gel 4 | + | durchsichtig |
| 75:25 Gel 5 | + | durchsichtig |
| 95:05 Gel 6 | + | durchsichtig |

### 3. Variation Monomere im wirksamen Polymer

Es wurden Copolymere eingesetzt, deren Anteil an Caprolactam erhöht worden ist. Über die freie OH-Gruppe wird das Copolymer kovalent an die Sol-Gel-Matrix angebunden. Dabei wird sie mit (3-Isocyanatopropyl)triethoxysilan umgesetzt und anschliessend mit TEOS verknüpft.

Tabelle 8: Abhängigkeit der Wasseraufnahme vom Anteil an Caprolactam in [mol]

| Copolymer** | Aufgenommene Wassermenge [mg] |
|---|---|
| MA 350 / NVC: 1 / 2 molar | 0.3 |
| MA 350 / NVC: 1 / 2.5 molar | 1.3 |
| MA 350 / NVC: 1 / 3 molar | 1.9 |

(fortgesetzt)

| Copolymer** | Aufgenommene Wassermenge [mg] |
|---|---|
| MA 350 / NVC: 1 / 4 molar | 2.1 |
| ** das verwendete Copolymer besteht aus MA350 (Monomere der Formel Ia (in welchen R1 für Methyl, A für 1,2-Propyldien, B für 1,2-Ethyldien, x für 1 bis 5 und y für 3 bis 40 stehen) und aus NVC (Monomere der Formel Ib (in welchen R2 und R3 unter Einschluss des Stickstoffatoms und der Carbonylgruppe ein Caprolactam bilden). | |

Es zeigt sich, dass die Wasseraufnahmefähigkeit mit dem Anteil an Caprolactam - Einheiten steigt und somit ein verbesserter Anti-Icing Effekt erreicht wird.

**Isocyanatgehalt - Restgehalt**

Die Isocyanat-Gruppe wird mit einem Überschuss an Dibutylamin, in Xylol gelöst, versetzt. Aliphatische, sekundäre Amine reagieren rasch und quantitativ mit Isocyanaten zu trisubstituierten Harnstoffen. Das überschüssige Amin wird anschliessend mit Salzsäure zurücktitriert. Der Äquivalenzpunkt der Titration ist durch einen Wendepunkt der Titrationskurve gekennzeichnet.

*Berechnung der Ergebnisse:*

$$w_{(NCO)} = \frac{(a-b) \cdot t \cdot c \cdot M}{EW \cdot 10}$$

$w_{(NCO)}$ = Gehalt an NCO in %
a = Verbrauch an HCl-Masslösung beim Wirkwert in ml
b = Verbrauch an HCl-Masslösung bei der Probe in ml
t = Titer der HCl-Masslösung
c = Stoffmengenkonz. der Masslösung, hier c= 0.5 mol/l M = molare Masse NCO = 42 g /mol
EW = Probeneinwaage in g

Der Isocyanat-Restgehalt der Proben liegt zwischen 0-1.8% der eingesetzten Menge, es kann also von einer vollständigen Umsetzung ausgegangen werden. Das Copolymer wurde an (3-Isocyanatopropyl)triethoxysilan geknüpft und anschliessend über die Endgruppe kovalent an die Sol-Gel Matrix gebunden.

**4. Wasserfestigkeitstest**

Gemäss der Variante A - D beschichtete Platten wurden für 10-15 min unter fliessendes Leitungswasser gehalten und anschliessend für 2 d in ein Leitungswasserbad gestellt. Der Test gilt als bestanden, wenn anschliessend noch eine Anti-Eis-Wirkung zu beobachten ist.

Tabelle 2: Wasserfestigkeit der Beschichtungen

| Probenbezeichnung | Test bestanden | Test nicht bestanden |
|---|---|---|
| Variante A | | x |
| Variante B | | x |
| Variante C | | x |
| Variante D | x | |

Die nach Variante D beschriebenen Beschichtungen, bei denen das wirksame Polymer kovalent angeknüpft ist, bestehen den Wasserfestigkeitstest. Die Beschichtungen nach den Varianten A - C, deren wirksames Polymer eingelagert ist, lösen sich während des Tests auf. Dies zeigt, dass Varianten A - C auch Anti-Icing Eigenschaften zeigen, nicht jedoch eine derartig ausgeprägte Wasserbeständigkeit aufweisen wie Variante D.
Die Beschichtungen nach Variante E sind weder unter fliessendem Wasser noch im mit Wasser gefüllten Becherglas

löslich.

**5. Variation Schichtdicke**

Der Einfluss der Schichtdicke der erfindungsgemässen Beschichtungen auf die Anti-Icing Eigenschaft wurde untersucht. Verschiedene Schichtdicken wurden durch mehrfaches Beschichten realisiert. Die Wasseraufnahmetests wurden für 3 d im Klimaschrank bei 10 °C und einer Luftfeuchtigkeit von 80% durchgeführt. Die Wassermenge wurde über die Gewichtszunahme nach 3 d bestimmt. Darüber kann die Wasseraufnahmefähigkeit der Beschichtung ermittelt werden.

Tabelle 10: Abhängigkeit der Wasseraufnahme von der Schichtdicke für Variante A

| Schichtdicke [μm] | Aufgenommene Wassermenge [mg] |
|---|---|
| 10 | 0.2 |
| 15 | 1.6 |
| 35 | 2.2 |

Tabelle 11: Abhängigkeit der Wasseraufnahme von der Schichtdicke für Variante D

| Schichtdicke [μm] | Aufgenommene Wassermenge [mg] |
|---|---|
| 8 | 0.5 |
| 12 | 4.4 |
| 18 | 5.6 |

Die Menge an aufgenommenem Wasser ist stark von der Schichtdicke der Beschichtung abhängig (siehe Tabelle 10 und 11). Die Wasseraufnahme lässt sich durch die Erhöhung der Schichtdicke nicht unendlich steigern. Der Wert für die aufgenommene Wassermenge nähert sich einem Grenzwert an. Demgemäss kann, auf das Beschichtungsmaterial bezogen, durch Wahl einer geeigneten Schichtdicke ein maximaler Anti-Icing Effekt erreicht werden. Im Vergleich zu bekannten Beschichtungen zeigen die hier beschriebenen, erfindungsgemässen Beschichtungen schon bei sehr geringen Schichtdicken einen signifikanten Anti-Eis Effekt.

**Patentansprüche**

1. Beschichtung, umfassend eine Matrix und darin eingelagert ein wirksames Polymer, **dadurch gekennzeichnet, dass**

   a. das wirksame Polymer kovalent an die Matrix gebunden ist; und
   b. das wirksame Polymer

      i. aus Struktureineheiten der Formel (Ia) besteht; oder
      ii. Struktureinheiten der Formeln (Ia) und (Ib) enthält; oder
      iii. Struktureinheiten der Formeln (Ia) und (Ic) enthält; oder
      iv. Struktureinheiten der Formeln (Ia) und (Ib) und (Ic) enthält.

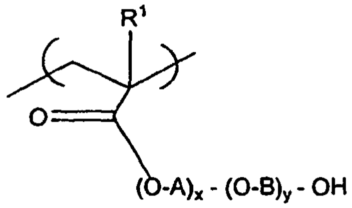

(Ia)

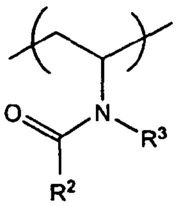

(Ib)

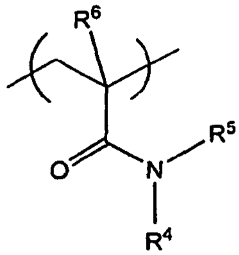

(Ic)

worin

$R^1$ für Wasserstoff oder C1-C6-Alkyl steht,
A für eine C2-C4-Alkylengruppe steht,
B für eine C2-C4-Alkylengruppe steht, mit der Maßgabe, dass A von B verschieden ist,
x, y unabhängig voneinander für eine ganze Zahl von 1 - 100 steht,
$R^2$ und $R^3$ unabhängig voneinander für Wasserstoff oder $C_1$-$C_6$-Alkyl stehen, oder $R^2$ und $R^3$ gemeinsam unter Einschluss des Stickstoffatoms und der Carbonylgruppe einen Ring von 5, 6 oder 7 Ringatomen bilden,
$R^4$ und $R^5$ unabhängig voneinander für Wasserstoff, $C_1$-$C_6$-Alkyl oder $C_1$-$C_6$-Cycloalkyl stehen, oder $R^4$ und $R^5$ gemeinsam unter Einschluss des Stickstoffatoms einen Ring mit 5, 6 oder 7 Ringatomen bilden,
$R^6$ für Wasserstoff oder $C_1$-$C_6$-Alkyl stehen; und

c. ggf. Vernetzer und / oder Kupplungsreagenz enthalten sind.

**2.** Beschichtung nach Anspruch 1, wobei

a. die Matrix ausgewählt ist aus der Gruppe umfassend Sol-Gele und Polymerschichten;
b. das wirksame Polymer aus

i. Struktureineheiten der Formel (Ia) besteht; oder
ii. Struktureinheiten der Formeln (Ia) und (Ib) enthält; oder
iii. Struktureinheiten der Formeln (Ia) und (Ic) enthält; oder
iv. Struktureinheiten der Formeln (Ia) und (Ib) und (Ic) enthält und 1-100 Gew.% Struktureinheiten der Formel (Ia), (Ib) und/oder (Ic) enthält;

c. das wirksame Polymer durch Umsetzung mit einem Kupplungsreagenz der Formel (IIIa) oder (IIIb)

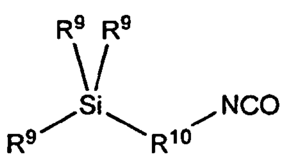

(IIIa)

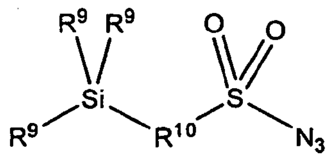

(IIIb)

worin

$R^{10}$ für einen bifunktionellen Kohlenwasserstoffrest mit 1-20 C-Atomen steht,
$R^9$ unabhängig voneinander für eine hydrolisierbare Gruppe steht,

kovalent in besagter Matrix eingelagert ist.

**3.** Beschichtung nach Anspruch 2, wobei das Verhältnis von wirksamen Polymer zu Matrix im Bereich von 30:70 bis 98:2 (w/w) liegt.

4. Beschichtung nach Anspruch 2, wobei besagtes Polymer 40-60 Gew.% Struktureinheiten der Formel (I) enthält.

5. Beschichtung nach Anspruch 2, wobei besagtes Polymer 40-60 Gew.% Struktureinheiten der Formel (I) enthält, und wobei besagte Struktureinheiten ein Lactam, bevorzugt ein Caprolactam, bilden.

6. Beschichtung nach Anspruch 2, wobei besagtes Polymer 10-50 Gew.% Kupplungsreagenz der Formel (IIIa) oder (IIIb) enthält.

7. Beschichtung nach Anspruch 2, wobei besagtes Polymer 10-50 Gew.% Kupplungsreagenz der Formel (IIIa) oder (IIIb) enthält, und wobei $R^9$ für $C_{1-8}$ Alkoxy und $R^{10}$ für $C_{1-10}$ Alkandiyl steht.

8. Beschichtung nach Anspruch 2, wobei besagte Matrix ausgewählt ist aus der Gruppe umfassend Sol-Gele.

9. Beschichtung nach Anspruch 1, wobei das wirksame Polymer aus Struktureinheiten der Formel (Ia) und (Ib) besteht, bevorzugt im molaren Verhältnis 1:2 bis 1:6.

10. Formkörper umfassend ein Substrat und eine Beschichtung gemäss einem der Ansprüche 1 - 9 als äussere Schicht.

11. Formkörper gemäss Anspruch 10, wobei die Oberfläche des Substrats aus einem Werkstoff besteht, welcher ausgewählt ist aus der Gruppe umfassend

    a. metallische Werkstoffe,
    b. keramische Werkstoffe,
    c. glasartige Werkstoffe,
    d. polymere Werkstoffe,
    e. cellulosehaltige Werkstoffe.

12. Vorrichtung enthaltend einen Formkörper gemäss Anspruch 10 oder 11, ausgewählt aus der Gruppe umfassend

    a. Rotorblätter von Windkraftanlagen, Hochspannungsleitungen;
    b. Tragflächen, Rotorblätter, Rumpf, Antennen, Sichtscheiben von Flugzeugen; Sichtscheiben von Kraftfahrzeugen; Rumpf, Mast, Steuerblätter , Takelage von Schiffen; Außenflächen von Eisenbahnwaggons; Oberflächen von Verkehrszeichen;
    c. Auskleidung von Kühlgeräten;
    d. Verpackungen von Lebensmitteln;
    e. Sensoren;
    f. Vorrichtungen zum Transport von Eisbrei; Oberflächen von Solaranlagen; Oberflächen von Wärmetauschern;
    g. Oberflächen, die beim Transport von Erdöl- und Erdgas mit Gasen Kontakt haben.

13. Verwendung eines wirksamen Polymers wie in Anspruch 2 definiert, zur Erzeugung einer Beschichtung mit Anti-Eis Eigenschaften.

14. Verwendung einer Beschichtung wie in einem der Ansprüche 1 bis 9 definiert, zur Bereitstellung eines Formkörpers oder einer Vorrichtung mit Anti-Eis Eigenschaften.

15. Verfahren zur Herstellung einer Beschichtung gemäss einem der Ansprüche 1 - 9 umfassend die Schritte...

    a. Bereitstellung eines ggf. aktivierten Substrates;
    b. Bereitstellung einer Zusammensetzung enthaltend Matrix und wirksames Polymer gemäss Anspruch 1-9;
    c. Beschichtung des Substrates mit besagter Zusammensetzung, bevorzugt mittels Dip-Coating oder Spray-Coating.

## Claims

1. A coating comprising a matrix and an active polymer embedded therein, **characterised in that**

    a. the active polymer is covalently bonded to the matrix; and

b. the active polymer

i. consists of structural units of the formula (Ia); or
ii. comprises structural units of the formulae (Ia) and (Ib); or
iii. comprises structural units of the formulae (Ia) and (Ic); or
iv. comprises structural units of the formulae (Ia) and (I) and (Ic),

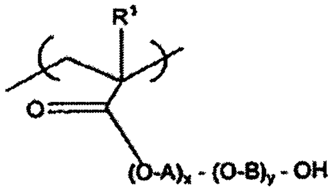
(Ia)

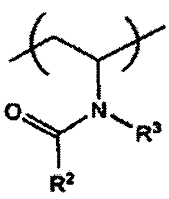
(Ib)

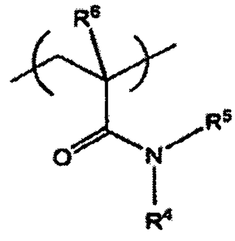
(Ic)

where

$R^1$ represents hydrogen or C1-C6 alkyl;
A represents a C2-C4 alkylene group;
B represents a C2-C4 alkylene group with the proviso that A is different from B; x, y represent a whole number from 1 - 100 independently of one another;
$R^2$ and $R^3$ represent hydrogen or $C_1$-$C_6$ alkyl independently of one another, or $R^2$ and $R^3$ together form a ring of 5, 6 or 7 ring atoms while including the nitrogen atom and the carbonyl group;
$R^4$ and $R^5$ represent hydrogen, $C_1$-$C_6$ alkyl or $C_1$-$C_6$ cycloalkyl independently of one another, or $R^4$ and $R^5$ together form a ring having 5, 6 or 7 ring atoms while including the nitrogen atom;
$R^6$ represents hydrogen or $C_1$-$C_6$ alykl; and

c. cross-linking agent and/or coupling reagent are optionally contained.

**2.** A coating in accordance with claim 1, wherein

a. the matrix is selected from the group comprising sol gels and polymer layers;
b. the active polymer consists of

i. structural units of the formula (Ia); or
ii. comprises structural units of the formulae (Ia) and (Ib); or
iii. comprises structural units of the formulae (Ia) and (Ic); or
iv. comprises structural units of the formulae (Ia) and (1b) and (Ic) and comprises 1-100 wt.%. structural units of the formulae (Ia), (Ib) and/or (Ic);

c. the active polymer is embedded covalently in said matrix by conversion with a coupling reagent of the formula (IIIa) or (IIIb),

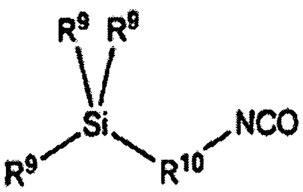
(IIIa)

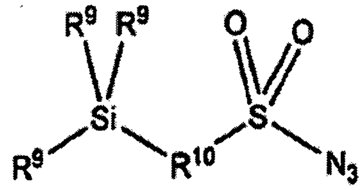
(IIIb)

where

$R^{10}$ represents a bifunctional hydrocarbon residue having 1-20 C atoms; and
$R^9$ represents a hydrolysable group independently of one another.

**3.** A coating in accordance with claim 2, wherein the ratio of active polymer to matrix lies in the range from 30:70 to 98:2 (w/w).

**4.** A coating in accordance with claim 2, wherein said polymer comprises 40 - 60 wt.% structural units of the formula (I).

**5.** A coating in accordance with claim 2, wherein said polymer comprises 40 - 60 wt.% structural units of the formula (I); and
wherein said structural units form a lactam, preferably a caprolactam.

**6.** A coating in accordance with claim 2, wherein said polymer comprises 10 - 50 wt.% coupling reagent of the formula (IIIa) or (IIIb).

**7.** A coating in accordance with claim 2, wherein said polymer comprises 10 - 50 wt.% coupling reagent of the formula (IIIa) or (IIIb); and wherein $R^9$ represents $C_{1-8}$ alkoxy and $R^{10}$ represents $C_{1-10}$ alkandiyl.

**8.** A coating in accordance with claim 2, wherein said matrix is selected from the group comprising sol gels.

**9.** A coating in accordance with claim 1, wherein the active polymer consists of structural units of the formulae (Ia) and (Ib), preferably in the molar ratio 1:2 to 1:6.

**10.** A moulded body comprising a substrate and a coating in accordance with one of the claims 1 - 9 as an outer layer.

**11.** A moulded in accordance with claim 10, wherein the surface of the substrate consists of a material which is selected from the group comprising

a. metal materials;
b. ceramic materials;
c. vitreous materials;
d. polymeric materials; or
e. materials containing cellulose.

**12.** An apparatus comprising a moulded body in accordance with claim 10 or claim 11, selected from the group comprising

a. rotor blades of wind turbines, high-voltage lines;
b. wings, rotor blades, fuselage, antennae, transparent screens of aircraft; transparent screens of motor vehicles; hull, mast, fin-rudders, rigging of ships; outer surfaces of railway waggons; surfaces of road signs;
c. lining of cooling devices;
d. packaging of foodstuffs;
e. sensors;
f. apparatus for transporting ice slush; surfaces of solar plant; surfaces of heat exchangers; or
g. surfaces having contact with gases on the transport of crude oil and natural gas.

**13.** Use of an active polymer as defined in claim 2 for generating a coating with anti-ice properties.

**14.** Use of a coating as defined in one of the claims 1 to 9 for providing a moulded body or an apparatus with anti-ice properties.

**15.** A method of manufacturing a coating in accordance with one of the claims 1 - 9 comprising the steps:

a. providing a substrate, optionally an activated substrate;
b. providing a composition comprising matrix and active polymer in accordance with claims 1 - 9; and
c. coating the substrate with said composition, preferably by means of dip coating or spray coating.

**Revendications**

1. Revêtement, comprenant une matrice et, stocké dans celle-ci, un polymère actif, **caractérisé en ce que**

   a. le polymère actif est lié de manière covalente à la matrice ; et
   b. le polymère actif

      i. se compose d'unités de structure de la formule (la) ; ou
      ii. contient des unités de structure des formules (la) et (Ib) ; ou
      iii. contient des unités de structure des formules (Ia) et (Ic) ; ou
      iv. contient des unités de structure des formules (Ia), (Ib) et (Ic) ; ou

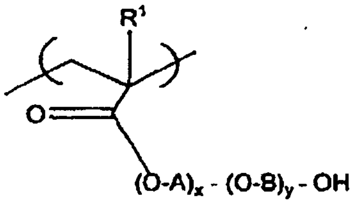
(Ia)

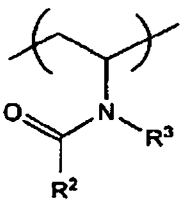
(Ib)

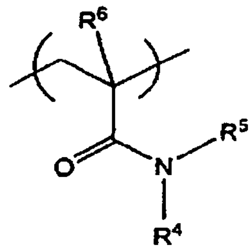
(Ic)

dans lequel

$R^1$ représente de l'hydrogène ou un alkyle C1-C6,
A représente un groupe d'alkyle C2-C4,
B représente un groupe d'alkyle C2-C4, à condition que A soit différent de B, x, y représentent indépendamment l'un de l'autre un nombre entier de 1 à 100,
$R^2$ et $R^3$ représentent indépendamment l'un de l'autre l'hydrogène ou l'alkyle $C_1$-$C_6$, ou $R^2$ et $R^3$ constituent en commun un composé cyclique de 5, 6 ou 7 atomes cycliques incluant l'atome d'azote et le groupe de carbonyle,
$R^4$ et $R^5$ représentent indépendamment l'un de l'autre l'hydrogène, l'alkyle $C_1$-$C_6$ ou le cycloalkyle $C_1$-$C_6$, ou $R^4$ et $R^5$ constituent en commun un composé cyclique de 5, 6 ou 7 atomes cycliques incluant l'atome d'azote,
$R^6$ représente l'hydrogène ou l'alkyle $C_1$-$C_6$ ; et

   c. le cas échéant, des réticulants et/ou des réactifs de copulation sont compris.

2. Revêtement selon la revendication 1, sachant que

   a. la matrice est sélectionnée à partir du groupe comprenant des gels de Sol et des couches de polymère ;
   b. le polymère actif

      i. se compose d'unités de structure de la formule (la) ; ou
      ii. contient des unités de structure des formules (la) et (Ib) ; ou
      iii. contient des unités de structure des formules (la) et (Ic) ; ou
      iv. contient des unités de structure des formules (la), (Ib) et (Ic) et contient 1-100 % du poids des unités de structure des formules (la), (Ib) et/ou (Ic) ;

   c. le polymère actif est stocké de manière covalente dans ladite matrice par mise en oeuvre avec un réactif de copulation des formules (IIIa) ou (IIIb)

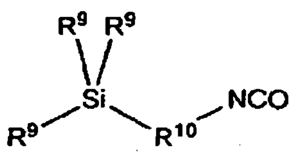
(IIIa)

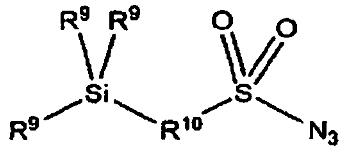
(IIIb)

dans lequel

$R^{10}$ représente un reste d'hydrocarbure bifonctionnel avec 1-20 atomes C,
$R^9$ représente indépendamment l'un de l'autre un groupe hydrolysable.

**3.** Revêtement selon la revendication 2, sachant que le rapport de polymère actif à la matrice se trouve dans la zone de 30:70 à 98:2 (w/w).

**4.** Revêtement selon la revendication 2, sachant que ledit polymère contient 40-60 % du poids d'unités de structure de la formule (I).

**5.** Revêtement selon la revendication 2, sachant que ledit polymère contient 40-60 % du poids d'unités de structure de la formule (I) et sachant que lesdites unités de structure constituent un lactame, de préférence un caprolactame.

**6.** Revêtement selon la revendication 2, sachant que ledit polymère contient 10-50-% du poids de réactif de copulation des formules (IIIa) ou (IIIb).

**7.** Revêtement selon la revendication 2, sachant que ledit polymère contient 10-50 % du poids de réactif de copulation des formules (IIIa) ou (IIIb), et sachant que $R^9$ représente un alkoxy $C_{1-8}$ et $R^{10}$ un alkandiyle $C_{1-10}$.

**8.** Revêtement selon la revendication 2, sachant que ladite matrice est sélectionnée à partir du groupe comprenant des gels Sol.

**9.** Revêtement selon la revendication 1, sachant que le polymère actif se compose d'unités de structure des formules (Ia) et (Ib), de préférence au rapport molaire 1:2 à 1:6.

**10.** Corps de moulage comprenant un substrat et un revêtement selon une quelconque des revendications 1-9 comme couche externe.

**11.** Corps de moulage selon la revendication 10, sachant que la surface du substrat se compose d'un matériau, qui est sélectionné à partir du groupe comprenant

a. des matériaux métalliques
b. des matériaux céramiques,
c. des matériaux hyalins
d. des matériaux polymères,
e. des matériaux à base de cellulose.

**12.** Dispositif contenant un corps de moulage selon les revendications 10 ou 11, sélectionné à partir du groupe comprenant

a. les pales de rotor de centrales éoliennes, des lignes haute tension ;
b. les ailes, les pales de rotor, le fuselage, les antennes, les vitres des avions, les vitres des véhicules à moteur ; la coque, le mât, le safran, le gréement de bateaux ; les surfaces extérieures de wagons ferroviaires, les surfaces de panneaux de circulation ;
c. l'habillage des appareils de réfrigération ;
d. les emballages de produits alimentaires ;
e. les capteurs ;
f. les dispositifs destinés au transport de la bouillie de glace ; des surfaces d'installations photovoltaïques, des surfaces d'échangeurs thermiques ;

g. les surfaces qui ont contact avec des gaz lors du transport de pétrole et de gaz naturel.

**13.** Utilisation d'un polymère actif tel que défini dans la revendication 2 en vue de la fabrication d'une couche avec des propriétés antigel.

**14.** Utilisation d'un revêtement tel que défini dans une quelconque des revendications 1 à 9 en vue de la mise à disposition d'un corps de moulage ou d'un dispositif avec des propriétés antigel.

**15.** Procédé en vue de la fabrication d'un revêtement selon une quelconque des revendications 1-9, comprenant les étapes :

a. de mise à disposition d'un substrat, activé le cas échéant ;
b. de mise à disposition d'une composition contenant la matrice et le polymère actif selon les revendications 1-9 ;
c. de revêtement du substrat avec ladite composition, de préférence avec un revêtement Dip ou de pulvérisation.

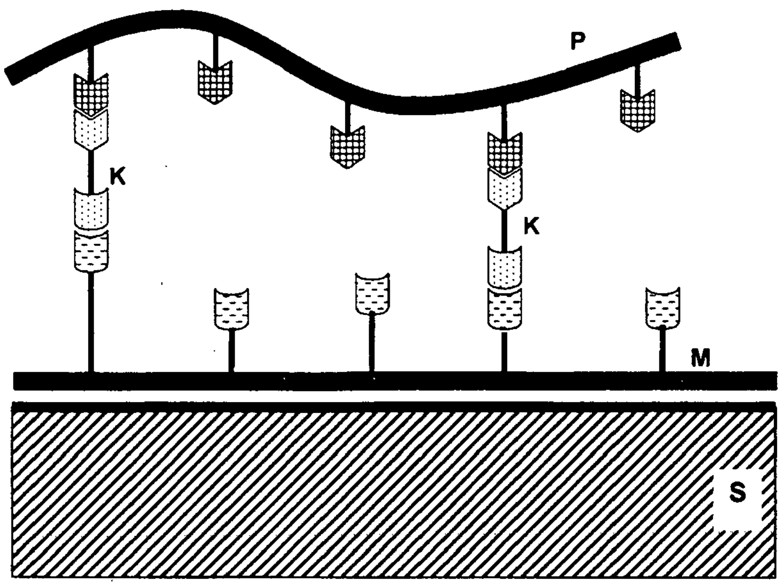


Fig. 1

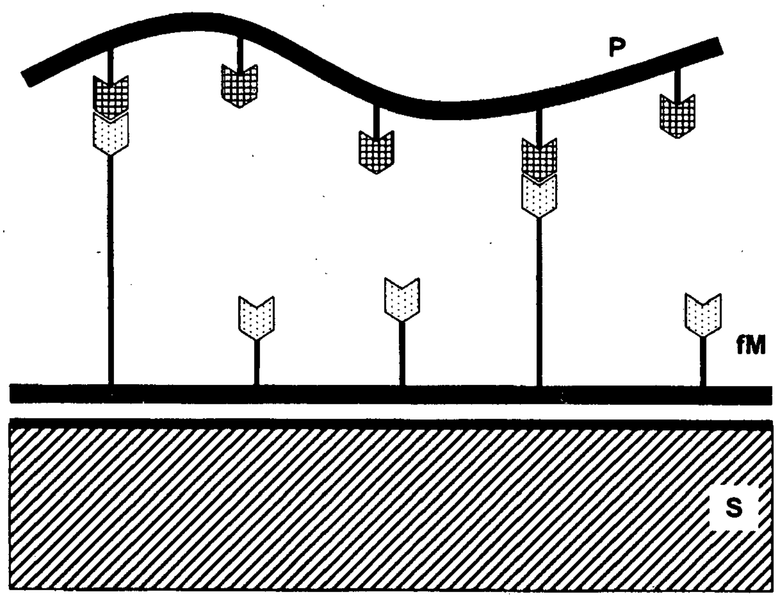


Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- GB 1494090 A
- EP 0979833 A
- DE 20023628
- US 7003920 B
- WO 2007058373 A1
- EP 1198432 A
- DE 102006049804 A
- US 6034208 A


### In der Beschreibung aufgeführte Nicht-Patentliteratur


- *Applied Thermal Engineering,* 2000, vol. 20, 737